# EUROPÄISCHE PATENTANMELDUNG

(11) **EP 3 909 754 A1**
(43) Veröffentlichungstag der Anmeldung: **17.11.2021**
(21) Anmeldenummer: 21176115.0
(22) Anmeldetag: 27.01.2014
(51) Int. Cl.: B29C 70/34, B60B 5/02, B29D 99/00, B60B 1/14, B29L 31/32

(54) **RADSTERN AUS ZUSAMMENGESETZTEN SPEICHENELEMENTEN UND DESSEN ANBINDUNG AN DAS FELGENBETT**

(30) Priorität: 05.02.2013 DE 102013201842
(62) Teilanmeldung aus: 14701742.0
(71) Anmelder: ThyssenKrupp Carbon Components GmbH, 01723 Kesselsdorf (DE)
(72) Erfinder: Werner, Jens, 01640 Coswig (DE); Köhler, Christian, 01099 Dresden (DE); Bartsch, André, 01307 Dresden (DE); Dreßler, Michael, 01307 Dresden (DE); Mäke, Sandro, 01796 Dohma (DE)
(74) Vertreter: Kailuweit & Uhlemann Patentanwälte Partnerschaft mbB

(57) **Zusammenfassung**

Gegenstand der vorliegenden Erfindung ist ein Rad, dass eine Felge mit Felgenbett (1) und Felgenhörnern, eine Nabe sowie mindestens drei Speichenelemente (2) aufweist. Jedes Speichenelement bildet mindestens eine Speiche zwischen der Nabe und der Felge aus. Die Speichenelemente (2) sind formschlüssig oder formschlüssig und stoffschlüssig an der Innenseite der Felge befestigt. Kennzeichnend ist, dass sich die Speichenelemente (2) im Nabenbereich in Umfangsrichtung aneinander an dazu ausgebildeten Stoßflächen abstützen. Des Weiteren wird ein Verfahren zur Herstellung des erfindungsgemäßen Rades offenbart.

## Beschreibung

Gegenstand der vorliegenden Patentanmeldung ist ein Rad, vorzugsweise für Kraftfahrzeuge, mit Speichen, wobei die Speichen im Nabenbereich in Umfangsrichtung unmittelbar aneinander grenzen und in axialer Richtung von zwei Nabenteilen fixiert sind. Auf der Felgenseite sind die Speichen an der Innenseite (der der Achse zugewandten Seite) des Felgenbettes formschlüssig befestigt. Des Weiteren wird ein Verfahren zur Herstellung des erfindungsgemäßen Rades aus Faserverbundwerkstoff offenbart.

Es existiert eine Vielzahl von Radkonstruktionen für Kraftfahrzeuge, insbesondere PKW. Häufig sind diese Räder aus einem Stück gefertigt. Fortgeschrittene Konstruktionen sehen die Fertigung aus mehreren Einzelteilen vor. Dies ist insbesondere bei den gegenwärtig in der Entwicklung befindlichen Konstruktionen aus faserverstärkten Kunststoffen der Fall. Es wird angestrebt, die Beschränkungen in der Designfreiheit zu überwinden, die aus den technologischen Zwängen der Fertigungsverfahren resultieren. So schlägt die DE 10 2006 051 867 ein Rad aus faserverstärktem Kunststoff vor, bei dem die Speichen durch Schlaufen aus Verstärkungsmaterial ausgebildet werden, die an der Nabe umgelenkt, der Innenseite der Felge folgend und im Zwischenraum zwischen Nabe und Felge aneinander anliegend ausgeführt sind. Der so entstehende Radstern ist stoffschlüssig mit der ebenfalls aus faserverstärktem Material hergestellten Felge verbunden. Bauartbedingt sind hier keine ausreichenden Variationen des Designs des Radsterns möglich.

Andere bekannte Konstruktionen versuchen diese Nachteile zu überwinden, indem die Öffnungen zwischen den Speichen aus dem faserverstärkten Vollmaterial (bspw. einer Scheibe, die auch konturiert sein kann) herausgefräst werden. Nachteilig wird bei diesem Vorgehen jedoch die Faserverstärkung beschädigt, was zu Festigkeitsverlusten führt.

Die DE 102010010512A1 sieht einen Radstern vor, der kraft- und/oder formschlüssig mit dem Felgenbett verbunden ist. Der Rastern besteht aus Faserverbundmaterial oder aus Metall. Nachteilig ist, dass der Radstern vorgefertigt werden muss und nicht in Verbindung mit der Fertigung des gesamten Rades hergestellt werden kann. Bei einem Radstern aus Metall ist die Kraftübertragung zwischen dem Metall und dem Faserverbundmaterial der Felge problematisch. Die unterschiedlichen Ausdehnungskoeffizienten der Materialien können zu Schäden beitragen.

Die US 7,669,940 B2 geht einen anderen Weg. Hier wird eine vollflächig ausgebildete Radscheibe durch vorgesetzte Speichen kaschiert. Diese Speichen sind in einer bevorzugten Ausführungsform als schleifenartige Gebilde ausgeführt, die im Nabenbereich unmittelbar aneinander anliegen und auch im Zwischenraum zwischen Nabe und Felge gemeinsam verlaufen. Die Befestigung im Nabenbereich erfolgt mittels eines Überwurfringes und Schraubverbindungen. An der Felge sind diese Speichen mittels Schraubverbindung in im Wesentlichen achsenparalleler Richtung befestigt. Die Speichen dienen ausschließlich dekorativen Zwecken und übernehmen keine tragende Funktion. Dementsprechend ist vorgesehen, sie aus Plastikmaterial herzustellen und die Verbindung zum Rad lösbar zu halten. Durch die Funktion der Speichenkonstruktion als reines Vorsatzteil für ein Scheibenrad wird das Gewicht des Rades nachteilig erhöht.

Es stellt sich somit die Aufgabe, eine Radkonstruktion vorzuschlagen, die die Beschränkungen in der Designfreiheit des Radsterns überwindet und trotzdem die Gewichts- und Festigkeitsanforderungen des modernen Automobilbaus erfüllt. Ein Verfahren zur Herstellung einer solchen Radkonstruktion soll angegeben werden.

Erfindungsgemäß wird die Aufgabe mit dem Rad nach Anspruch 1 gelöst. Ein Verfahren zur Herstellung des erfindungsgemäßen Rades aus Faserverbundwerkstoff ist in Anspruch 9 offenbart. Vorteilhafte Ausführungsformen sind in den rückbezogenen Unteransprüchen dargestellt.

Das erfindungsgemäße Rad weist eine Felge mit Felgenbett und Felgenhörnern, eine Nabe sowie mindestens drei Speichenelemente, die Speichen zwischen der Nabe und der Felge ausbilden, auf. Die Speichenelemente sind formschlüssig oder formschlüssig und stoffschlüssig an der Innenseite der Felge befestigt. Im Nabenbereich liegen die Speichenelemente in Umfangsrichtung aneinander an und stützen sich aneinander ab. Sie weisen dazu plane Stoßflächen auf, an denen sie aneinander anliegen. In axialer Richtung werden die Speichenelemente bevorzugt durch zwei Nabenteile fixiert, zwischen die sie eingelegt sind. Diese Nabenteile liegen einander auf der Achse gegenüber, wobei zwischen ihnen die Speichenelementeenden angeordnet sind. Bevorzugt berühren die Nabenteile die Speichenelementeenden direkt und halten diese.

Die Nabenteile wirken als Krafteinleitungselemente und übertragen axiale Kraftanteile, die auf das Rad wirken, auf die Achse und umgekehrt. Sie bestehen vorzugsweise aus faserverstärktem Material (bevorzugt identisch mit dem Material der Felge oder der Speichenelemente). Bevorzugte Ausführungsformen sehen Nabenteile aus Metall, bevorzugt, Stahl, Aluminium oder Magnesium bzw. geeigneten Legierungen aus dem Stand der Technik vor. Bevorzugt weisen die Nabenteile Schraubenöffnungen für die Befestigungsschrauben des Rades auf. Weiterhin weisen die Nabenteile oder eines der Nabenteile auch eine zentrale Achsöffnung auf, wenn die Bauform des Rades eine solche erfordert. Bevorzugt sind die Nabenteile flanschförmig ausgebildet und liegen einander flächig gegenüber. Eine weitere bevorzugte Ausführungsform sieht jedoch Zapfen an einem oder an beiden Nabenteilen vor, die krallenartig zwischen den Speichen eingreifen und bis an das gegenüberliegende Nabenteil bzw. die Zapfen des gegenüberliegenden Nabenteils heranreichen. Die Zapfen unterstützen vorteilhaft die Übertragung radialer Kräfte auf die Speichen. Die Zapfen der beiden Nabenteile können auch alternierend angeordnet sein. Vorzugsweise verbleibt ein geringer Abstand zwischen den Zapfen gegenüberliegender Nabenteile bzw. zwischen den Zapfen des einen und dem anderen Nabenteil, um zu vermeiden, dass die bei der Montage des Rades über die Schrauben aufgebrachte Spannkraft vollständig durch die Zapfen aufgenommen wird. Diese Kraft soll bevorzugt auf die Speichenelementenden wirken, die zwischen den beiden Nabenteilen eingespannt sind. In einer bevorzugten Ausführungsform weisen die Zapfen Gewindebohrungen auf, die mit Schraubenlöchern des gegenüberliegenden Nabenteils korrespondieren. Auf diese Weise können die Nabenteile die Enden der Speichenelemente halten, ohne eine stoffschlüssige Verbindung mit diesen eingehen zu müssen. Dies ist insbesondere Vorteilhaft, wenn die Speichenelemente Formkörper enthalten und während der Fertigung in unkonsolidiertem Zustand bereitgestellt werden, da auf diese Weise der Zusammenhalt des Nabenbereichs des Rades sichergestellt werden kann. Unter Nabenbereich wird der Bereich der Speichenelemente verstanden, der sich zwischen geometrischer Radachse und den radial äußeren Enden der Nabenteile befindet, also den in der Vorder- und Rückansicht des Rades von den Nabenteilen bedeckten Speichenelementabschnitten.

Die Speichen des erfindungsgemäßen Rades übernehmen die Übertragung der beim Fahrzeugbetrieb auftretenden Kräfte. Es handelt sich somit nicht um reine Zierelemente. Der Einsatz der erfindungsgemäßen Räder ist insbesondere für PKW, LKW, Busse und sonstige Nutzfahrzeuge vorgesehen.

In einer bevorzugten Ausführungsform sind die Stoßflächen der Speichenelemente so konturiert, dass sie formideal ineinandergreifen. Dazu weisen die Speichenelemente in einer bevorzugten Ausführungsform auf einer Seite (in Rotationsrichtung gesehen) bspw. Erhebungen auf, und auf der anderen Seite Vertiefungen. Die Erhebungen und Vertiefungen benachbarter Speichenelemente greifen dann formschlüssig ineinander.

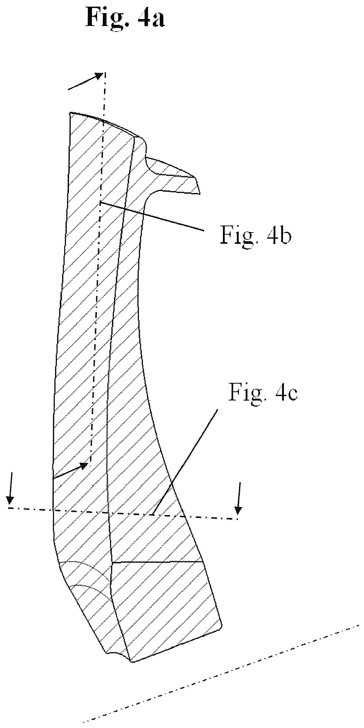

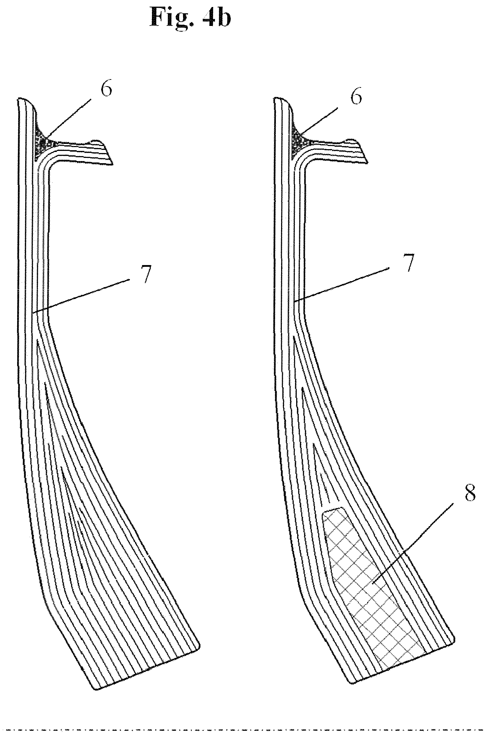

Jedes Speichenelement besteht aus einem oder mehreren Textilsträngen oder Lagen von Textilsträngen. Die Faserverstärkungen in den Textilsträngen sind bevorzugt unidirektional, parallel zur Längsachse der Speiche bzw. von der Nabe zur Felge gerichtet. Weiterhin bevorzugt sind Lagen, in denen unidirektionale Fasern flächig zusammengehalten sind. Auch hier sind die Lagen bzw. die unidirektionalen Fasern der Lagen parallel zur Längsachse der Speiche bzw. von der Nabe zur Felge gerichtet. Bevorzugt sind die übereinanderliegenden Lagen zusammengeheftet (gestickt). In einer bevorzugten Ausführungsform ist vorgesehen, die Textilstränge mit einem oder mehreren Lagen Textils zu umhüllen, um diese im unkonsolidierten Zustand zusammenzuhalten und im konsolidierten Zustand einen besseren Schutz gegen seitliche Beanspruchungen zu bieten. In bevorzugten Ausführungsformen sind die Lagen in axialer Richtung (Fig. 4b) oder in Umfangsrichtung aneinander geschichtet bzw. angeordnet.

Besonders vorteilhaft wird die Ausrichtung der Lagen so gewählt, dass bei einer späteren Aufteilung der Lagen an einem Speichenende, bspw. zur Anbindung an die Felge oder zum Einlegen von Formkörpern, ein lagenweises Auffalten erfolgen kann und keine Lagen, zerteilt werden müssen.

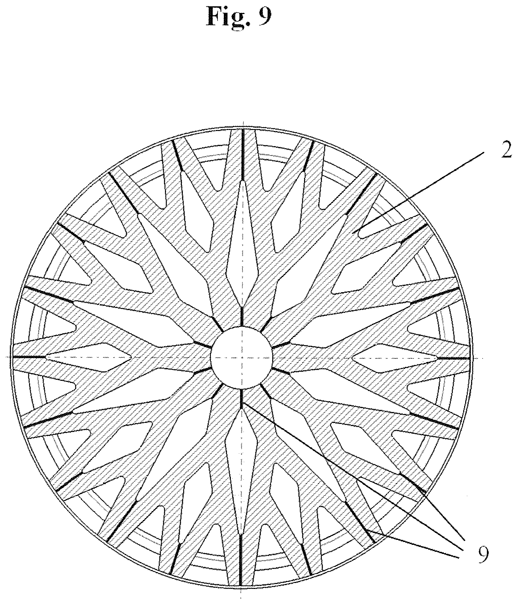

In einer ersten einfachen Ausführungsform bildet jedes Speichenelement eine einzelne Speiche aus, die sich von der Nabe zur Felge erstreckt. Diese Speiche kann dabei als Designelemente bereits Querschnittsvariationen entlang der Längsachse oder Krümmungen, aufweisen. Als Längsachse der Speiche wird dabei die Achse entlang der größten Ausdehnung der Speiche verstanden. In bevorzugten Ausführungsformen bildet ein Speichenelement zwei, drei, vier oder mehr Speichen aus. Insbesondere ist es bevorzugt, dass in einem Speichenelement zwei oder mehr Speichen ausgebildet sind, wobei die Textilstränge einer Speiche sich in radialer Richtung aufteilen und mit denen aufgeteilten Textilsträngen anderer Speichen zusammenlaufen (Fig.9). Derartiges kann auch mehrfach erfolgen, so dass Gitter oder rhombenartige- Strukturen oder andere dekorative Ausführungen möglich sind.

In einer weiteren bevorzugten Ausführungsform werden Formkörper in die Speichenelemente eingelegt, die der Vorgabe und Fixierung der angestrebten Speichenform dienen. Diese Formköper bestehen vorzugsweise aus Materialien, die sich sehr gut mit dem Matrixmaterial und/oder den Faserverstärkungen verbinden (bspw. Aufschmelzen während der Konsolidierung o. ä.). Die Speichen können beliebige Querschnitte aufweisen, die eine belastungsgerechte Gestaltung des Radsterns ermöglichen, bevorzugt sind Rechteck- und/oder Quadratquerschnitte. Weiterhin bevorzugt sind jedoch auch runde, ovale oder polygonale Querschnitte. Die Querschnitte können auch entlang der Längsachsen der Speichen variieren.

In einer bevorzugten Ausführungsform weisen die Speichenelemente in ihrem Inneren im Nabenbereich Formkörper auf. In einer ersten bevorzugten Ausführungsform sind die Formkörper vollständig von faserverstärktem Material der Speichen bedeckt. In einer weiterhin bevorzugten Ausführungsform reichen die Formkörper am der Achse zugewandten Ende bis an die Oberfläche (das Ende der Speiche) und übertragen Auflagekräfte. In einer weiteren, besonders bevorzugten Ausführungsform sind diese Formkörper in axialer Richtung von Lagen von Textilsträngen (Vorder- und Rückseite der Speichenelemente) bedeckt. In Umfangsrichtung reichen sie bis an die Oberfläche der Speichenelemente heran, so dass die an den Stoßflächen der Speichenelemente auftretenden Kräfte durch die Formkörper aufgenommen bzw. übertragen werden. In noch einer weiteren bevorzugten Ausführungsform reichen die Formkörper in axialer Richtung oder in axialer und UmfangsRichtung bis an die Oberfläche der Speichenelemente heran. So können die Formkörper auch axiale bzw. axiale und Rotationskräfte übertragen. Die Formkörper im Nabenbereich bestehen bevorzugt aus Metall (bspw. Stahl, Aluminium). Sie können auch innerhalb der Speichenelemente über den Nabenbereich in Richtung der Felge hinausragen und so eine verbesserte Kraftübertragung zwischen Nabe und Felge realisieren.

Die Speichenelemente werden zusammengesetzt und bilden so den Radstern aus. Dabei weisen die Speichenelemente im Radnabenbereich bevorzugt einen axialgerichteten Kegel oder Konusflächen aus, die als Stoßflächen fungieren. Sie werden bevorzugt in axialer Richtung durch Spannscheiben, die als Nabenteile (Krafteinleitungselemente) fungieren zusammengepresst und gehalten.

In einer bevorzugten Ausführungsform liegen die Stoßflächen benachbarter Speichenelemente direkt und ohne zwischenliegende Bauteile aufeinander. In einer weiteren bevorzugten Ausführungsform liegen zwischen zwei benachbarten Stoßflächen Zwischenelemente, die die Umfangskräfte übertragen. Die Zwischenelemente bestehen bevorzugt aus Metall, aber auch Kunststoffe und Keramiken sind möglich.

Die Anbindung der Speichenelemente an das Felgenbett erfolgt bevorzugt über eine hinterschnittige Verbindung, wobei vorzugsweise die Enden der textilen Speichenpreform durch Umflechten (Preforming des Felgenbettes mittels des Umflechtverfahrens) formschlüssig mit dem Felgenbett verbunden sind. Bevorzugte Ausführungsformen sehen dazu vor, die Textilstränge, die die Speichenelemente bilden, im Felgenbereich aufzuteilen und so anzuordnen, dass sie der Felgenform in axialer Richtung oder aber in Umfangsrichtung (in beide Rotationsrichtungen des Rades) folgen und so eine formschlüssige Verbindung ausbilden.

Die Speichenelemente weisen die erforderlichen Öffnungen für die Befestigungsschrauben auf, die mit den diesbezüglichen Öffnungen der Nabenteile korrespondieren. Diese Öffnungen werden durch entsprechende Umflechtung bei der Herstellung der textilen Lagen oder mittels Durchstechens eines vorbereiteten Speichenelementes in unkonsolidiertem Zustand geschaffen, wobei die Fasern bevorzugt unverletzt bleiben. Dies wird erreicht, indem die Öffnungen nicht gestanzt, sondern vorteilhaft, mittels eines Dorns durch Verdrängung der Faserlagen geschaffen werden. Sollten Formkörper im Nabenbereich der Speichenelemente zum Einsatz kommen, so weisen diese vorteilhaft die notwendigen Öffnungen für die Schraubenlöcher bereits auf. Bevorzugt werden die Öffnungen für die Befestigungsschrauben mittels CNC-Nachbearbeitung generiert.

Bevorzugt besteht das erfindungsgemäße Rad vollständig aus Faserverbundwerkstoff. Hier handelt es sich vorzugsweise um eine Harzmatrix mit Kohlefaser-, Glasfaser-, Metall- oder Aramidfaserverstärkung. Weitere bevorzugte Ausführungsformen sind Mischformen mit Metallspeichenelementen und Felge aus faserverstärktem Material oder faserverstärkte Speichen, die mit einer Metallfelge verbunden sind. Auch eine Radkonstruktion, die vollständig aus Metall besteht ist möglich. Geeignete Metalle sind aus dem Stand der Technik bekannt (Stahl, Aluminium, Magnesium, Leichtmetalllegierungen).

Die erfindungsgemäße Radkonstruktion bedarf vorteilhaft keiner CNC-Nachbearbeitungen. Sie realisiert das hohe Masseeinsparpotential des Radsterns bei Einhaltung der im Automobilbau gestellten Festigkeitsanforderungen. Insbesondere bietet die erfindungsgemäße Radkonstruktion eine hohe Designfreiheit für Speichenräder.

Das Verfahren zur Herstellung der erfindungsgemäßen Radkonstruktion aus faserverstärktem Material sieht vor, dass die einzelnen Speichenelemente aus Faserlagen vorgefertigt und im unkonsolidierten Zustand bereitgestellt werden. Die Speichenelemente werden in ein Formwerkzeug derart eingelegt, dass sie einander im Nabenbereich in Umfangsrichtung berühren. Das Formwerkzeug wird verschlossen, wobei die Speichenenden, die die Verbindung zur Felge herstellen sollen, freigelegt bleiben. Diese werden in einer ersten bevorzugten Verfahrensweise axial in zwei Anteile aufgeteilt und die Anteile axial in entgegengesetzte Richtungen in die Form des Felgenbettes eingepasst. Anschließend erfolgt durch Überflechten die Herstellung des Felgenbettes, wobei ein Formschluss der Speichenenden an das Felgenbett erreicht wird. In einer weiteren bevorzugten Verfahrensweise erfolgt die Aufteilung der Faserlagen der Speichenenden parallel zur Achse, so dass ein Umlegen der Enden in und gegen die Rotationsrichtung erfolgt. Auch hier wird anschließend zur Herstellung der Felge überflochten. Abschließend können Felge und Speichen gemeinsam mit Matrixmaterial getränkt und konsolidiert werden. Abschließend werden das vordere und das hintere Nabenteil (Krafteinleitungselement) zur axialen Stabilisierung der Speichen in der Nabe angebracht. In einer bevorzugten Verfahrensweise werden die Nabenteile in die Form eingelegt und halten die Speichenelemente beim Überflechten. Sie werden bereits im Zuge der Konsolidierung in das Rad eingebunden.

Eine weiterhin bevorzugte Verfahrensweise zur Herstellung des erfindungsgemäßen Rades sieht vor, dass die Speichenelemente aus faserverstärktem Material bestehen, dass bereits teilweise oder auch vollständig vorkonsolidiert ist. Die Speichenelemente werden dann in die Form eingefügt und mit dem Verstärkungsmaterial des Felgenbettes überflochten, dass anschließend konsolidiert wird. Analog erfolgt die Herstellung von Hybridrädern, bei denen die Speichenelemente aus Metall bestehen. Diese werden in die Form eingelegt und an der felgenseitigen Enden ebenfalls überflochten.

### Ausführungsbeispiele

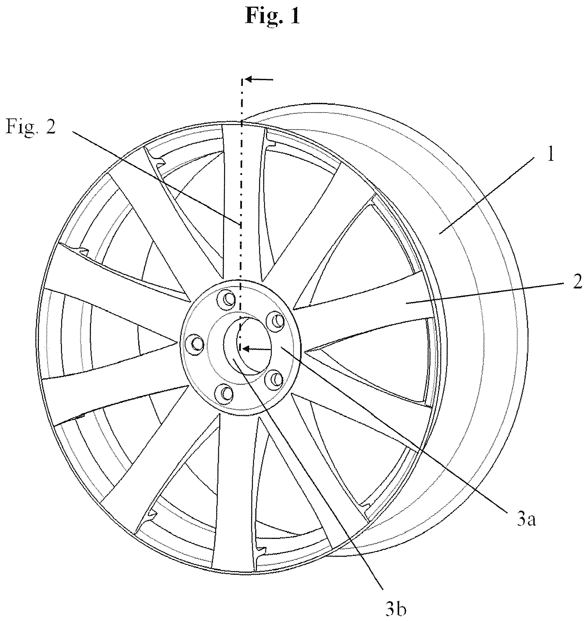

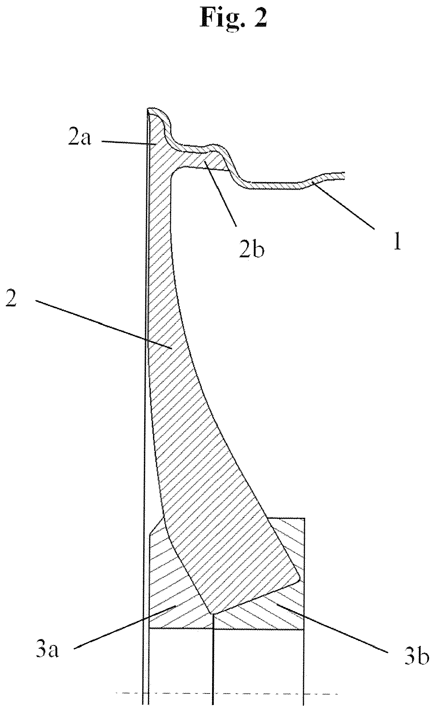

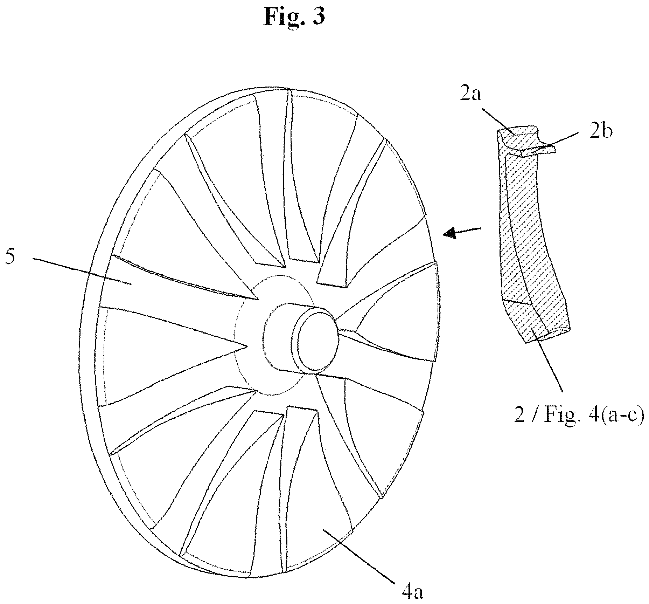

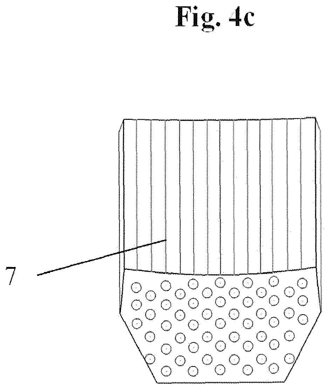

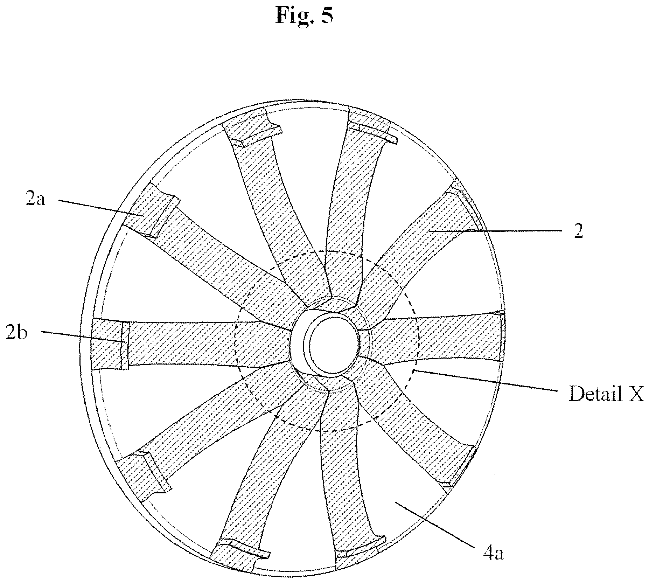

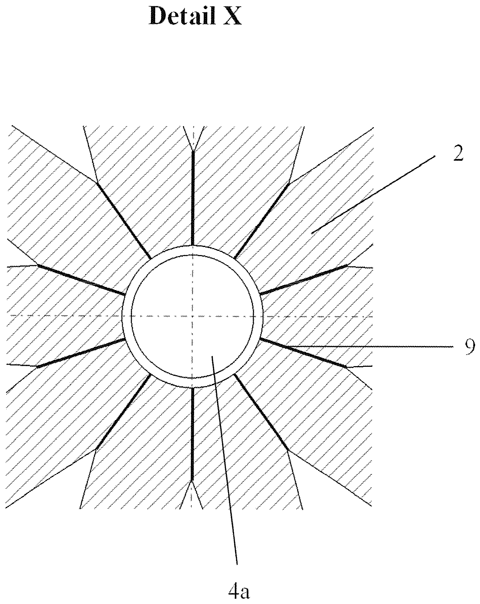

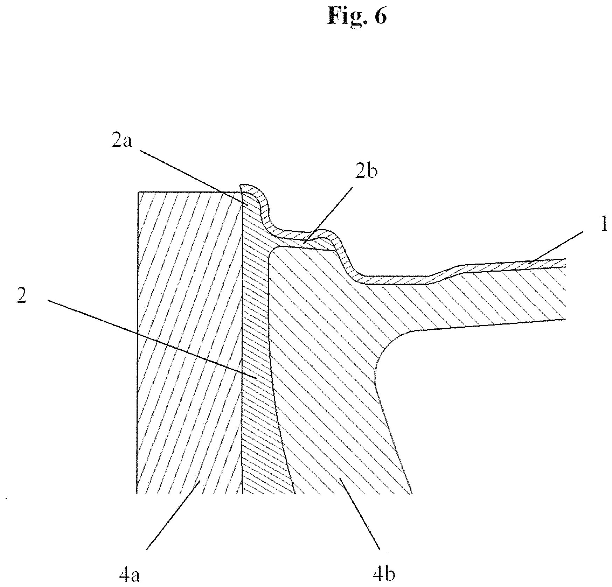

Ausführungsbeispiel 1 nach Fig. 1, Fig. 2, Fig. 3, Fig. 4(a-c), Fig. 5, Fig. 6:
Beim ersten Ausführungsbeispiel ist der Radstern aus einzelnen radialen Speichenelementen (2), die im Bereich der Radnabe zusammengesetzt sind, aufgebaut. Die über umfangsgerichtete Verbindungsflächen zusammengesetzten Speichenelemente bilden dabei die Radnabe aus. Die Formgebung der Speichen erfolgt im Vorfeld beispielsweise mit Hilfe der TFP - Technologie (Tailored-Fiber-Placement-Technologie), womit die einzelnen Textilstränge aus mehreren, bereits dimensionierten, Faserlagen aufgebaut werden und damit die unkonsolidierte Endkontur unter Berücksichtigung der späteren Speichenform erzeugt werden kann. Dabei kann die Schichtung der Faserlagen unterschiedlich erfolgen, beispielsweise in axialer (Fig. 4b) Richtung oder Umfangsrichtung (Fig. 4c). Die an das Felgenbett (1) angebundenen Speichenenden weisen zwei getrennte Textilstränge auf, die einerseits bis zum Felgenhorn verlaufen (2a) und andererseits den Hinterschnitt mit dem Felgenbett erzeugen (2b) und damit beide einen Formschluss mit dem Felgenbett bilden. Bei einem axial geschichteten Faserlagenaufbau verlaufen die einzelnen Faserstränge (7) dabei wie in Fig. 4b abgebildet, wobei infolge der Aufspreizung des Speichenendes ein Zwickelbereich (6) erzeugt wird, welcher durch Zusatzmaterial vor oder während des nachfolgenden Flechtprozesses gefüllt wird. In dickwandigen Bereichen können die einzelnen Speichenelemente nur aus Fasersträngen bestehen oder auch aus einem zusätzlichen Füllmaterial (8), welches von Fasersträngen teilweise oder komplett umgeben ist. Die Speichenelemente können im Radnabenbereich einen axialgerichteten Kegel oder Konusflächen aufweisen, worüber die zusammengesetzten Speichenelemente über Krafteinleitungselemente verspannt bzw. verpresst werden. Die Speichengeometrie kann dabei einen beliebigen Querschnitt aufweisen, wobei ein in axialer Richtung aufgelöster Querschnitt bevorzugt wird. Die eingelegten Speichenelemente sind durch ihre gemeinsamen, umfangsgerichteten Fügezonen (9) im Bereich der Radmittelachse durch einen Formschluss miteinander verbunden. Nachdem die vorgefertigten Textilstränge (2) in die entsprechenden Nuten (5) des äußeren Formwerkzeuges (4a) eingelegt sind, wird das innere Formwerkzeug montiert, welches ebenfalls Nuten für die Speichenelemente aufweisen kann oder mit Tauchkanten für die Nuten der äußeren Formhälfte ausgestattet ist. Der Hinterschnitt, der infolge der Speichenanbindung an das Felgenbett entsteht, kann durch ein Einlegerwerkzeug oder andere konstruktive Lösungen vermieden werden, um eine Entformung des Formwerkzeuges zu gewährleisten. Anschließend erfolgt die Ausbildung des Felgenbettes (1) durch Umflechten der als Flechtkern fungierenden Formwerkzeuge sowie der umgelegten Speichenenden. Damit werden die Speichen axial über einen Formschluss in die textile Struktur des Felgenbettes integriert. Für die Verpressung der textilen Preform während der Konsolidierung kommt im Bereich des Felgenbettes ein mehrteiliges Außenwerkzeug zum Einsatz. Nach der Konsolidierung weisen Radstern und Felgenbett eine form- und stoffschlüssige Verbindung auf. Die Aufnahme der Radschrauben wird durch ein vorderes Krafteinleitungselement (3a) gewährleistet, welches mit den zusammengesetzten Speichenelementen verklebt wird. Die Anlagefläche des Rades zum Fahrzeug erfolgt ebenfalls über ein hinteres Krafteinleitungselement (3b), dass gleichzeitig die Funktion der Mittenzentrierung übernimmt. Beide Krafteinleitungselemente verpressen axial die zusammengesetzten Speichenelemente und halten diese somit unter Druckvorspannung.

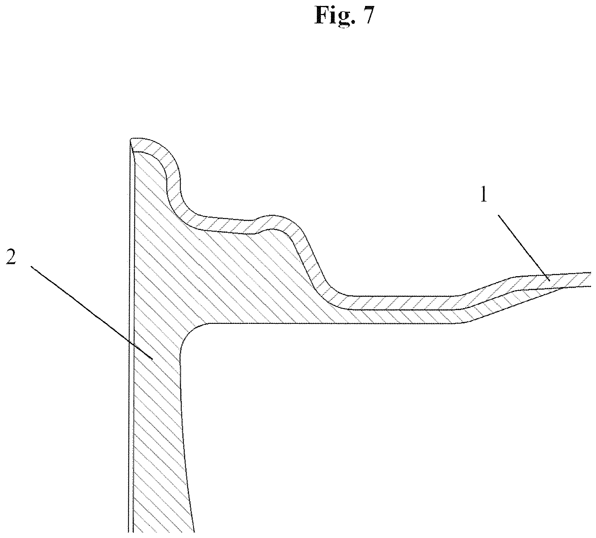

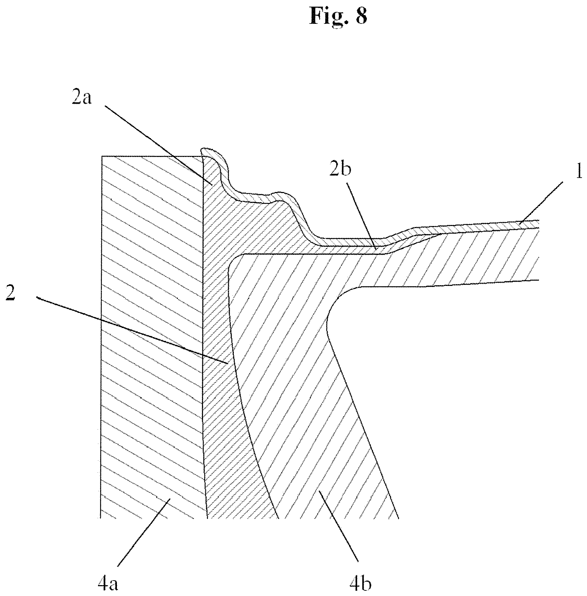

Ausführungsbeispiel 2 nach Fig. 7, Fig. 8:
Das zweite Ausführungsbeispiel unterscheidet sich vom ersten dahingehend, dass die einzelnen Speichenelemente eine formschlüssige, hinterschnittige Verbindung mit dem gesamten Tiefbett des Felgenbettes erzeugen. Dabei wird das zum Tiefbett laufende Speichenende (2b) derart angepasst, dass die Wandstärke vom Felgenhornbereich bis zum Beginn des Felgentiefbettes deutlich erhöht und die den Hinterschnitt bildende Lasche entsprechend dem Felgentiefbett angepasst wird. Diese Speichenanbindung erlaubt eine Vereinfachung des Formwerkzeuges, indem kein Einlegerwerkzeug für die Hinterschnittausbildung benötigt wird. Die das Tiefbett umgreifenden Speichenenden (2b) werden daher nach Montage des inneren Formwerkzeuges in dafür vorgesehene Nuten eingelegt. Die für den Flechtprozess erforderliche Felgenbettkontur wird daher durch das innere und äußere Formwerkzeug sowie der umgelegten Speichenenden ausgebildet.

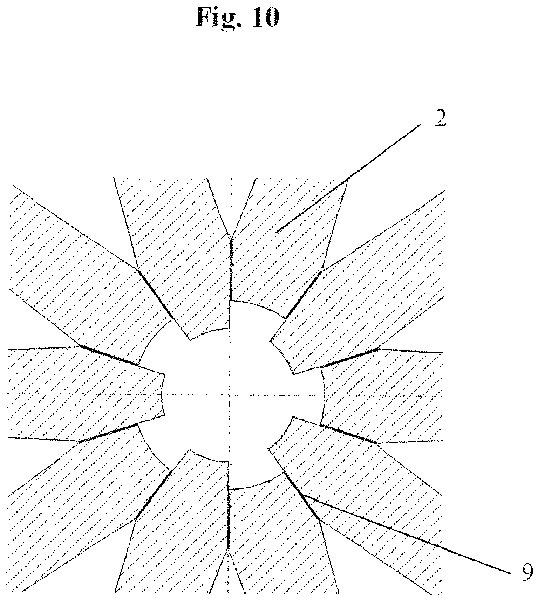

Ausführungsbeispiel 3 nach Fig. 10:
Die Fig. 10 zeigt schematisch die Fügezonen (9) zwischen den einzelnen Speichenelementen (2), wobei sich hierbei die Speichenelemente in ihrer radialen Länge in Richtung der Radmittelachse unterscheiden. Jede zweite Speiche weist somit eine Art Aussparung in radialer Richtung auf, wonach ein abgestufter Radnabenbereich entsteht. Die Krafteinleitungselemente (3a, 3b) sind derart ausgeführt, dass axiale Ausformungen in die Aussparungen eingreifen und somit eine verdrehsichere Verbindung zwischen Speichen-und Krafteinleitungselementen erzeugt wird und Rotationskräfte besser übertragen werden können. In axialer Richtung werden die Speichenelemente (2) durch die Nabenteile (3a und 3b) gehalten.

### Bezuqszeichenliste

- 1: Felgenbett
- 2: Einzelnes radiales Speichenelement
- 2a: Speichenende zum Felgenhorn
- 2b: Speichenende für den Formschluss
- 3a: Vorderes Krafteinleitungselement/Nabenteil
- 3b: Hinteres Krafteinleitungselement/Nabenteil
- 4a: Äußeres Formwerkzeug
- 4b: Inneres Formwerkzeug
- 5: Nuten für Speichenelemente
- 6: Zwickelbereich
- 7: Einzelne Faserstränge
- 8: Füllmaterial/Formkörper
- 9: Fügezone

## Patentansprüche

1. Rad aus Faserverbundmaterial, aufweisend eine Felge mit Felgenbett und Felgenhörnern, eine Nabe sowie mindestens drei Speichenelementen aus Faserverbundmaterial, wobei jedes Speichenelement mindestens eine Speiche zwischen der Nabe und der Felge ausbildet und wobei die Faserverstärkung der Speichenelemente ein oder mehrere Textilstränge oder Lagen von Textilsträngen aufweist und formschlüssig oder formschlüssig und stoffschlüssig an der Innenseite der Felge befestigt sind, **dadurch gekennzeichnet, dass** sich die Textilstränge oder Lagen von Textilsträngen der Speichenelemente im Felgenbereich aufteilen und sie der Felgenform in axialer Richtung oder aber in Umfangsrichtung folgen und sich die Speichenelemente im Nabenbereich in Umfangsrichtung aneinander an dazu ausgebildeten Stoßflächen abstützen.

2. Rad nach Anspruch 1, **dadurch gekennzeichnet, dass** die Stoßflächen benachbarter Speichenelemente glatt oder formschlüssig ineinandergreifend konturiert sind.

3. Rad nach Anspruch 1 oder 2, **dadurch gekennzeichnet, dass** die Speichenelemente im Nabenbereich in axialer Richtung zwischen zwei einander auf der Achse gegenüberliegenden Nabenteilen angeordnet sind.

4. Rad nach Anspruch 3, **dadurch gekennzeichnet, dass** die Nabenteile Zapfen aufweisen, die krallenartig zwischen den Speichen eingreifen.

5. Rad nach Anspruch 3 oder 4, **dadurch gekennzeichnet, dass** ein Nabenteil in den Zapfen Gewindebohrungen und das gegenüberliegende Nabenteil eine korrespondierende Schraubenöffnung aufweist.

6. Rad nach einem der vorhergehenden Ansprüche, **dadurch gekennzeichnet, dass** die Speichenelemente aus faserverstärktem Material bestehen.

7. Rad nach Anspruch 6, **dadurch gekennzeichnet, dass** die Speichenelemente aus Lagen unidirektionaler Fasern bestehen, die in Matrixmaterial eingebettet sind.

8. Rad nach Anspruch 6 oder 7, **dadurch gekennzeichnet, dass** die Speichenelemente im Nabenbereich Formkörper aufweisen, die Kräfte in axialer Richtung zwischen den Speichenelementen und den Nabenteilen und/oder in Umfangsrichtung zwischen den Speichenelementen übertragen.

9. Verfahren zur Herstellung eines Rades aus Faserverbundmaterial, **dadurch gekennzeichnet, dass** mindestens die folgenden Verfahrensschritte ausgeführt werden:
a. Einlegen von Speichenelementen die ein oder mehrere Textilstränge oder Lagen von Textilsträngen aufweisen, die parallel zur Längsachse der Speichenelemente verlaufen in eine Form
b. Schließen der Form, wobei die Speichenelementenden in Felgennähe freigelegt verbleiben und in zwei Anteile aufgeteilt werden, die in die Form des Felgenbettes eingepasst werden und wobei die geschlossene Form die Form der Felge ausbildet
c. Überflechten der geschlossenen Form zur Herstellung des Felgenbettes
d. Konsolidieren von Speichenelementen und Felge
e. Entformen des Rades
**dadurch gekennzeichnet, dass**
in Schritt b. die Enden der Speichenelemente im Nabenbereich in Umfangsrichtung unmittelbar aneinander anliegend in der Form platziert und in Schritt c. in axialer Richtung durch zwei Nabenteile begrenzt werden.

10. Verfahren nach Anspruch 9, **dadurch gekennzeichnet, dass** die Speichenelemente in Schritt b. im Nabenbereich mit Formkörpern zur Aufnahme von Kräften versehen werden.

11. Verfahren nach Anspruch 9 oder 10, **dadurch gekennzeichnet, dass** in Schritt b. die zwei Anteile der Speichenelementenden in entgegengesetzte axiale Richtungen in die Form eingepasst werden und so eine formschlüssige Verbindung zur Form des Felgentiefbetts herstellen.

12. Verfahren nach Anspruch 9 oder 10, **dadurch gekennzeichnet, dass** in Schritt b. die zwei Anteile der Speichenelementenden in entgegengesetzte Rotationsrichtungen des Rades in die Form eingepasst werden und so eine formschlüssige Verbindung zur Form der Felgeninnenseite herstellen.
